Europäisches Patentamt

European Patent Office

Office européen des brevets

(11) Publication number: **0 198 565**
**A1**

# (12) EUROPEAN PATENT APPLICATION

(21) Application number: 86200642.6

(22) Date of filing: 16.04.86

(51) Int. Cl.4: **C08J 5/06** , **D06M 10/00** , **D01F 6/04**

(30) Priority: 18.04.85 NL 8501128

(43) Date of publication of application:
**22.10.86 Bulletin 86/43**

(84) Designated Contracting States:
**BE DE FR GB IT NL**

(71) Applicant: **STAMICARBON B.V.**
**Mijnweg 1**
**NL-6167 AC Geleen(NL)**

(72) Inventor: **Burlet, Rudolf Johannes Hubertus**
**Wilderbeek 32**
**NL-6166 HP Geleen(NL)**
Inventor: **Raven, Johannes Henricus Hubertus**
**Grasgraefken 17**
**NL-6171 SH Stein (L.)(NL)**
Inventor: **Lemstra, Pieter Jan**
**Walcundusstraat 3**
**NL-6444 TX Brunssum(NL)**

(74) Representative: **van Golde, Lambertus Maria**
**Gerardus T. et al**
**OCTROOIBUREAU DSM P.O. Box 9**
**NL-6160 MA Geleen(NL)**

(54) Process for preparing polyolefin articles with great adhesive strength for polymeric matrices, as well as for preparing reinforced matrix materials.

(57) The adhesive strength of polyolefin articles - obtained by thermoreversible gelation-for polar polymeric matrices, e.g. epoxy resins, is improved by an intermittent corona treatment, followed by coating with a solution of a polar polymer, e.g. polyurethane, and drying of the articles.

Reinforced polymeric matrix materials containing so treated polyolefin articles are also claimed.

EP 0 198 565 A1

## PROCESS FOR PREPARING POLYOLEFIN ARTICLES WITH GREAT ADHESIVE STRENGTH FOR POLYMERIC MATRICES, AS WELL AS FOR PREPARING REINFORCED MATRIX MATERIALS

The invention relates to a process for improving the adhesive strength of polyolefin articles to polar polymeric matrices, as well as for preparing polar matrix materials reinforced with these articles.

It is known how to prepare composite reinforced materials by incorporating (embedding) in a matrix material, particularly a polymeric matrix material, a reinforcing material, for instance in the form of filaments. Examples of reinforcing materials include inorganic substances, such as glass fibres, and synthetic materials, such as polymer fibres. Highly attractive as reinforcing material seem to be polyolefin articles, for instance fibres, tapes or films, on acount of, inter alia, their low specific gravity, their low raw materials costs and their good chemical resistance. A major condition for applying such articles as reinforcing material is a high tensile strength, high modulus and a high adhesive strength.

It is known how to prepare, for instance, filaments with a high tensile strength and modulus on the basis of solutions of high-molecular polyolefins, particularly polyethylene, see US-A-4,344,908, 4,411,854, 4,422,993, 4,430,383 and 4,436,689. It has been found, however, that the adhesive power of the resulting fibres to polar polymeric materials, which fibres consist of highly oriented polyolefin material as a result of the degree of stretching applied, is too low for many practical applications.

It has already been proposed (see EP-A-62.491) to adhere and to embed polyolefin materials to and in thermosetting and thermoplastic matrices. According to this known process a highly oriented polymer material, for instance in the form of a fibre or film, having a stretch ratio of at least 12 : 1, is subjected for that purpose to a plasma discharge treatment, preferably after etching with chromic acid. The polymer material used in that process particularly consists of melt-spun fibres of polyethylene, polypropylene or copolymers of these with a weight-average molecular weight lower than 300,000, a tensile strenght of about 1 GPa and modulus of 30-40 GPa.

A disadvantage of the known process is that the strength of the polymeric articles deteriorates very badly in the process and that in a manner virtually linear with the increase in adhesive strength.

The present invention now provides a process for improving the adhesive strength of polyolefin articles to polar polymeric matrices without any real deterioration of the strength of the articles.

The invention therefore relates to a process for preparing polyolefin articles with great adhesive strength for polar polymeric matrices, which process is characterized in that a polyolefin article, whichis obtained by spinning or extruding a solution or melt of a linear polyeolfin having a weight-average molecular weight of at least $4 \times 10^5$, converting the article obtained after spinning or extrusion into a gel article by cooling and stretching this gel article at elevated temperature, is subjected to a corona treatment with a total irradiation dosage of 0.05-3.0 (Watt.minute)/m², effected intermittently in dosages of 0.01-0.15 (Watt.minute)/m², the treated article is coated with 0.5-5% (wt), calculated as polymer on the article to be coated, of a 5-50% (wt) solution of a polar polymer and the article thus obtained is dried.

The application of a corona treatment with plastics is known in itself, particularly for improving the printability of synthetic films, see for instance Tappi 65 (August 1981) no. 8, pp. 75-78, and Polymer Engineering and Science, 20 (March 1980) no. 5, pp. 330-338. In this treatment the adhesion of these films, for instance from low-molecular and weakly oriented polyethylene, for coatings or ink is improved.

In the present invention the starting material is preferably a polyolefin filament, tape or film.

The polyolefin articles used are particularly highly oriented polyolefin (polyethylene) filaments obtained by subjected gel filaments to a high degree of strechting (stretch ratio higher than 20) and having a very high tensile strength, for instance in the case of polyethylene higher than 2 GPa, and a very high modulus, for instance higher than 50 GPa.

The high-molecular linear polyolefin used is preferably polyethylene with a weight-average molecular weight of at least $4 \times 10^5$, specially of at least $8 \times 10^5$, which may contain minor amounts, preferably 5 moles % at most, of one or more other alkenes copolymerized with it, such as propylene, butylene, pentene, hexene, 4-methylpentene, octene, etc., and with at least 100 unbranched carbon atoms, and preferably with at least 300 unbranched carbon atoms between carbon atoms provided with side chains with more than 1 C atom. The polyethylene may contain minor amounts, preferably 25 % (wt) at most, of one or more other polymers, specially an alkene-1-polymer, such as polypropylene, polybutylene or a copolymer of propylene with a minor amount of ethylene. Besides, the polyolefin used may also be a high-molecular linear polypropylene or ethylenepropylene copolymer.

In the present process the article is passed through a high-frequency electric field generated, for instance, between an electrode and a guide roll by means of a high-frequency generator and a transformer. The frequency used in this process is generally 10,000 to 30,000 Hz. In order to obtain a very finely distributed haze of discharges on the article the electrode is brought very close to the roll, for instance 0.5-5 mm. In this operation the article may be applied to, for instance a reel of film by which it is guided, or to the guide roll itself. Preference is given to applying an in-line corona treatment in the winding or after the strechting of, for instance, a fibre, using a number of electrodes arranged in series.

It has been found that in consequence of the corona treatment the temperature of the article rises. The temperature of the articles must, of course, be prevented in the process from locally exceeding the melting temperature. To this end the articles to be treated can, on the one side, be supplied, for instance, at ambient temperature and on the other side the chosen dosage to be used in the treatment will be such that the temperature does not locally exceed the melting temperature. To this end an intermittent treatment is applied with small dosages. It has been found that in an intermittent treatment the mechanical properties of the article remain virtually the same when the dosage to be used in the treatment increases, whereas in the event of a large supplementary increase of the dosage, i.e. increase of the energy output per unit of time, the mechanical properties decrease.

The total required dosage may vary, depending in part on the nature of the article and the matrix and the adhesive strength desired. Generally, a dosage of 0.05-3.0, particularly 0.1-2.0, and preferably 0.2-1.5 (Watt.minute)/m² will be used. As the article has been found to melt when applying a single dosage larger than or equal to about 0.4 - (Watt.minute)/m², and -as explained above -a number of intermittent dosages are more advantageous than a single dosage, an intermittent treatment with small dosages of about 0.01-0.15 (Watt.minute)/m² each is applied. In this treatment the spaces of time between the dosages are not directly critical. In view of the throughput rate required for a technical realization, which is in order of the spinning rate, this space of time will generally, with the usual rol diameter, be smaller than 1 second.

The corona treatment may possibly be carried out in an inert atmosphere, such as nitrogen, but is preferably carried out in the presence of a reactive gas, such as oxygen or carbon dioxide or air with a low ($\leq$ 1 %) relative humidity.

According to the invention the articles obtained after the corona treatment are coated with a polar polymer applied to the articles in the form of a solution. In this operation various coating techniques known per se can be applied, for instance immersing the article in a bath of the coating solution, passing the article, particularly a fibre, through the solution, or spraying or atomizing the solution onto the article to be coated.

The polar polymeric coating material applied may be, inter alia, polyurethanes, polar polyethylene grades, epoxy resins or polyamids.

Preference is given to applying a polyurethane, such as an aliphatic or aromatic polyurethane elastomer.

As solvent various solvents known per se for polar polymers can ben used, for instance decalin, acetone, toluene, methylethylketone, ethanol, isopropanol, toluol or water.

The amount of coating material applied may vary, depending in part upon the nature of this material, upon the article to be treated and upon the matrix material. Generally 0.5-10 % (wt), specifically 1-2 % (wt), polar polymer will be used, calculated on the article to be coated.

The concentration of the coating solution to be used is not critical and is generally 5 to 50 % (wt). Preference is given to applying a 10-40 % (wt) coating solution.

The temperature in the coating operation may vary. Preference is given to realizing the invention at ambient temperature. If the coating material is a polar polyethylene, a temperature higher than the melting point of this polar polyethylene, for instance above 120¤C, must be applied.

According to the invention the coated articles are subsequently dried (or cured). This can be done by air-heating, for instance to 90-120¤C for 3-10 minutes.

It has been found that after a corona treatment and coating operation such articles, specially filaments, have such a great adhesive strenght for polymeric matrices that after embedding the articles in these matrices it was found no longer to be possible for these articles to be pulled loose without breaking the article in this operation. The tensile strenght and the modulus of the articles treated in this manner were found in this operation not to be lower than those of the non-treated articles, or hardly so.

The treated articles, unlike the films treated in the known processes, were found to retain their adhesive strenght for a long time. Even after more than four weeks' storage the articles treated according to the invention could be embedded in a matrix of polymer material, in which operation the adhesive strength between article and matrix was hardly less than if they had been embedded immediately after the treatment.

Surprisingly, another extra advantage was obtained in applying the present process, viz. an increase of the melting point of the articles after embedding. This is very important for a number of technical applications, particularly in the application of articles of polyethylene, which is known to have a reletively low melting point. The increase of the melting point of polyethylene - embedded in a matrix -was found to be about 8¤C.

The articles obtained in applying the invention can be incorporated in polymeric matrices in a manner known per se, for instance impregnation of fibres and winding. A general survey of customary techniques in these operations is given in 'Handbook of Composites' by Luben G., published 1982 by van Nostrand Reinhold Co. (New York).

The polymeric matrices used may generally be any polar polymer material, such as epoxy, phenol, vinylester, polyester, acrylate, cyanoacrylate and polymethylmethacrylate resins and polyamide materials. The matrix used is preferably an epoxy resin.

The reinforced matrices thus obtained have a very wide techni-cal application range, such as in boats, surfboards, glider and aircraft parts, printing plates, car parts, for instance bonnet, wings, etc.

The invention is further elucidated in the following examples without, however, being limited thereto.

Comparative example A

High-molecular polyethylene fibres having a tensile strength of 1.9 GPa, a modulus of 46 GPa and a filament titre of 112 dtex, prepared via gel spinning of a polyethylene solution (weight-average molecular weight about $1.5 \times 10^6$) according to the process described in the GB patent specification 2,051,667 were subjected to a corona treatment in an apparatus of the Mark II type of the firm of Vetaphone. In this operation an intermittent treatment of 24 dosages of 0.01 (Watt.minutes)/$m^2$ was applied. The fibres thus treated had virtually the same tensile strength (1.85 GPa) as the non-treated fibres and a slightly higher modulus (about 48-50 GPa).

An epoxy resin mixture consisting of 100 parts by weight of a resin, grade Europox 730 (RTM), and 15 parts by weight of a hardener, grade XE 278 (RTM), available from the firm of Schering, was cast into a mould. Subsequently, the polyethylene fibres subjected or not subjected to a corona treatment were embedded and the whole of it was hardened at 60-110¤C.

.Execution: Into a cylindrical casting mould of silicone rubber with an inside diameter of D mm and previously cut into a halfway its length the liquid resin was cast before hardening. Subsequently the fibre was embedded in the mould via the incision of the silicone rubber, and the whole was hardened at elevated temperature.

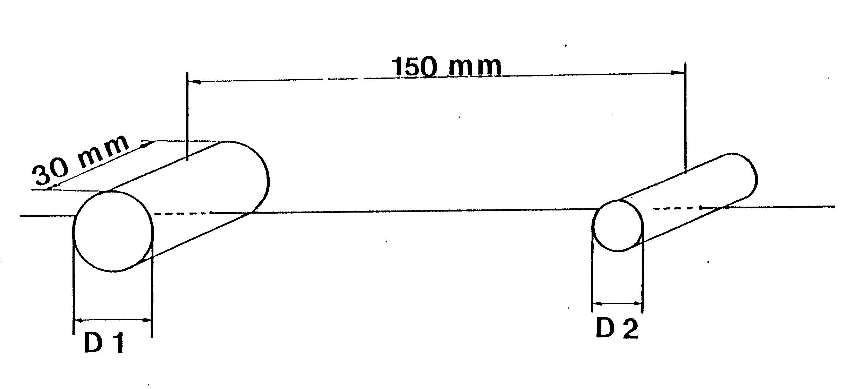

Now, by embedding in two silicone rubber moulds the configuration resulted as represented diagrammatically in Figure 1.

After hardening, the pull-out strength was measured by means of an Instron-1195 tensile tester with special adapted grips for the cylindrical test bars.

The grip length of th fibre between the two cylindrical matrices was 150 mm.

The drawing speed was always 1 mm/min and measurements were made at room temperature and 60 % relative humidity. In the experiments the chosen diameters were $D_1 = 9$ mm and $D_2 = 5$ mm.

The adhesive strength between the fibres and the matrix was tested by means of a so-called pull-out test. In order to be able to properly differentiate between the treated and non-treated fibres mutually, it is important for the fibre-matrix interface to be adjusted and to be chosen correctly. For if the fibre-matrix interface is too large, for instance if the embedded length is too great, if fibre will break in a pull-out test and no differentiation will occur between the fibres.

The results obtained are summarized in Table I.

Example I

Fibres subjected or not subjected to a corona treatment having a composition as described in comparative example A were drawn at room temperature, at a speed of about 0.5 m/minute, through a bath with a coating solution consisting of a 40 % (wt) solution of an aromatic polyurethane elastomer in a mixture of 9 parts by weight methylethylketone and 1 part by weight isopropyl alcohol. The polyurethane elastomer used in this operation was a product available from the firm of Scado under the name of Uraflex 85 A7 E. Successively the fibres were air-dried for about 4 minutes at a temperature of 100-105¤C.

The fibres thus treated had virtually the same tensile strength and modulus as the non-treated fibres.

Subsequently the fibres were embedded in the same way as described in Example A and their pull-out strength was determined.

The results obtained are summarized in Table I.

## Example II

The process of example I was repeated on the understanding that the coating solution used was a 20 % (wt) solution of an aliphatic polyurethane elastomer (available under the name of Uraflex 190 E 1 from the firm of Scado) in isopropyl alcohol.

The results obtained are again summarized in Table I.

## Table I

| Fibre—Matrix system | Pull-out strength (N) |
| --- | --- |
| **Example A** | |
| a. reference | 4.0-4.7 |
| b. corona-treated | 10.4 |
| **Example I** | |
| a. reference + coating | 3.7-4.5 |
| b. corona-treated + coating | 14.1 |
| **Example II** | |
| a. reference + coating | 3.0-4.0 |
| b. corona-treated + coating | 13.1 |

## Claims

1. Process for preparing polyolefin articles with great adhesive strength for polar polymeric matrices, characterized in that a polyolefin article, which is obtained by spinning or extruding a solution or melt of a linear polyolefin having a weight-average molecular weight of at least $4 \times 10^5$, converting the article obtained after spinning or extrusion into a gel article by cooling and stretching this gel article at elevated temperature, is subjected to a corona treatment with a total irradiation dosage of 0.05-3.0 (Watt.minute)/m², effected intermittently in dosages of 0.01-0.15 (Watt.minute)/m², the treated article is coated with 0.5-5 % (wt), calculated as polymer on the article to be coated, of a 5-50 % (wt) solution of a polar polymer and the article thus obtained is dried.

2. Process according to claim 1, characterized in that the polyolefin article used is a polyolefin filament, tape or film.

3. Process according to any one of claims 1 or 2, characterized in that the polyolefin article obtained after the corona treatment is coated with 1-2 % - (wt), calculated as polymer on the article to be coated, of a 10-40 % (wt) solution of a polar polymer.

4. Process according to any one of claims 1-3, characterized in that the coating material used is a solution of a polyurethane.

5. Process for preparing reinforced polymeric ma-

**0 198 565**

trix materials, characterized in that a polyolefin article obtainable while applying the process according to any one of claims 1-4 is incorporated in a polar polymeric matrix material.

6. Process according to claim 5, characterized in that the matrix material used is an epoxy resin.

150 mm

30 mm

D 2

D 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 829 324 (P.J.J.B. BLAIS et al.) * Claims 1-12; column 3, lines 12-50; column 3, line 59 - column 4, line 23; column 5, lines 13-16 * | 1-4 | C 08 J 5/06 D 06 M 10/00 D 01 F 6/04 |
| | --- | | |
| A | GB-A-1 462 717 (STAMICARBON) * Claims; page 1, lines 40-80; page 2, lines 35-52; page 3, lines 17-20 * | 1-4 | |
| | --- | | |
| A | DE-A-1 694 564 (LENTIA) * Claims * | 1,5,6 | |
| | --- | | |
| A | EP-A-0 021 672 (MOBIL OIL) | | TECHNICAL FIELDS SEARCHED (Int. Cl.4) |
| | --- | | |
| A | EP-A-2 026 379 (J.H. VARDE) | | C 08 J D 06 M B 05 D |
| | --- | | |
| A | US-A-4 029 876 (T.R. BEATTY et al.) | | |
| | --- | | |
| A | GB-A-2 051 667 (STAMICARBON) | | |
| | --- | | |
| P,A | EP-A-0 144 997 (STAMICARBON) * Claims * | 1-6 | |
| | ----- | | |

The present search report has been drawn up for all claims

| Place of search | Date of completion of the search | Examiner |
|---|---|---|
| THE HAGUE | 17-07-1986 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82